# EUROPEAN PATENT APPLICATION

(11) **EP 2 120 216 A1**
(43) Date of publication of application: **18.11.2009**
(21) Application number: 09160291.2
(22) Date of filing: 14.05.2009
(51) Int. Cl.: G07C 9/00, G08B 13/184

(54) **Personnel Detector**

(30) Priority: 14.05.2008 GB 0808736
(71) Applicant: Maple Fleet Services Limited, Stockport Cheshire SK1 3EU (GB)
(72) Inventor: Lynchehaun, Kevin, Blackburn, Lancashire BB1 9AU (GB)
(74) Representative: Gillam, Francis Cyril

(57) **Abstract**

A personnel security system has an electronic controller (22) for a component such as an electrically operated door lock (20) or an electrical power tool. A light source (23) directs polarised light into a detection zone. There is a detector (24) for that light following its reflection from a reflective panel (28) worn or carried by a person (26) in that zone and having a different plane of polarisation. The detector (24) is coupled to the controller (22) so that the component (20) is operated following detection of that light. In addition, a personnel detector (33) may be provided to detect the presence of a person (26) in the detection zone.

## Description

This invention relates to a personnel security system and also to a method of controlling access to a protected region or controlling unauthorised use of equipment.

Modern health and safety requirements place a considerable burden on personnel in industrial areas, in order that people entering those areas are adequately protected from hazards which may reasonably be expected to occur. For example, in many industries, it is a requirement that personnel in a defined area must wear a reflective jacket or tabard, usually referred to as a Hi-Vi jacket. Such a jacket may be made from a reflective fabric but further to increase its reflectivity particularly if it is to be worn outside areas of bright sunlight, it is a common practice to apply to those jackets reflective strips of very efficient reflective material. It is a further requirement on many constructional sites that operators must wear hard-hats.

Even if there is no general requirement for the wearing of reflective jackets or hard-hats, when using certain kinds of tools, there may be a requirement to wear an item of clothing adequately to protect the operator. For example, there may be a requirement to wear safety spectacles or to wear heavy duty gloves for example when undertaking cutting or grinding operations on work-pieces.

It is in human nature not fully to comply with the requirements defined by health and safety requirements when gaining access to predefined areas or when using hazardous tools. Full use of safety clothing and equipment may be somewhat onerous on work personnel and tool operators and not infrequently someone may consider it not worthwhile, particularly if that person may be on the site for only a short period of time or intending to use a tool only briefly.

It is a principal aim of this invention to restrict access to a site or to prevent use of a particular tool, in the event that a person requiring access or wishing to use the tool is not wearing the appropriate items of safety clothing as required by health and safety legislation.

According to one aspect of this invention, there is provided a personnel security system including an electronic controller for an associated component, a light source driven by the controller for directing polarised light into a detection zone, and a detector for polarised light directed into said zone and reflected with a different plane of polarisation from a reflective panel carried or worn by a person in said zone, the detector being coupled to the controller such that said component is operated when light emanating from the source is detected following reflection of that light by said panel so as to have a different plane of polarisation from that of the light directed into said zone.

According to a second aspect of this invention, there is provided a method of controlling access to a protected region or restricting unauthorised use of equipment, which method comprises energising a source of polarised light to direct polarised light into a detection zone and monitoring for light emanating from the source and then reflected from a polarising reflecting panel which rotates the plane of polarisation of the incident light from the source, whereby light from the source and reflected from the panel is detected to allow access or use of equipment, as appropriate.

It will be appreciated that with this invention, a person is allowed access to a protected region or is permitted to use equipment, tools or the like only in the event that the controller detects the person is wearing suitable protective clothing, as determined by the detection of polarised light reflected from a polarising panel provided on an item of clothing, which light was polarised at transmission but the plane of polarisation of the light following reflection is different from that as transmitted. Thus, the detector in the security system of this invention must be sensitive to the plane of polarisation of the light incident on the detector and to ignore light having the same plane of polarisation as that of the transmitted light.

The nature of the component associated with the electronic controller depends upon the kind of security system. For example, in the case of a gated area where access is to be permitted only if someone is wearing a Hi-Vi, the component may be a lock which controls opening of the gate or a door. In this case, if no appropriately polarised light is detected when someone attempts to open the gate, the lock will not permit opening of that gate; but if such light is detected, then the lock will be released so permitting access through the gate.

If there is no gate to the protected area but merely an entranceway, then the component may comprise some kind of alarm device such as a bell or siren, or a light which could be made to flash so as to give a warning. In this case, the security system must include some kind of person-detector in order to be aware that the system must then look for light having the appropriate plane of polarisation, following reflection from a suitable item of clothing. Were no person-detector provided, someone not wearing the appropriate clothing could simply walk through the entranceway without the system detecting that the person was not wearing the appropriate clothing. Only by firstly detecting the presence of a person wishing to gain access and then determining whether that person is wearing the appropriate clothing is the system able to issue an alarm in the event that no appropriate clothing is detected.

In the foregoing, reference has been made to the wearing of a reflective jacket including polarising reflective strips. Such strips may be provided on other items of clothing such as on a hard-hat as is commonly employed on construction sites, on gloves in the case of an operator using a grinder or power saw or on safety work boots for construction and metal workers.

The term "polarised light" as used herein is intended to include light within the visible spectrum as well as ultra-violet and infrared radiation, insofar as infrared radiation can be polarised. Preferably, the security system of this invention and method employ polarised visible red light and conveniently vertically polarised radiation is transmitted and horizontally polarised radiation is detected. Radiation within the 400-700nm range may be employed and advantageously 625nm transmitters are used together with correspondingly tuned receivers.

The reflective panel may comprise any of the known high reflectivity materials employing embedded prismatic reflectors which have the ability to reflect light back in the same direction whence it came but simultaneously to turn the plane of polarisation of polarised incident light through 90°. Such materials are well known commercially and are frequently referred to as retro-reflective materials. One such material is sold under the brand Scotchlite 6755 and is manufactured by 3M Corporation. Such material is sold in tape form with a sewable 4mil polyester film backing and is particularly suitable for adding to existing items of clothing or for incorporation during original manufacture of those items. Another similar material is sold under the brand Reflexite.

Further, by adopting transmitted radiation of a particular modulated frequency, the detector may also be tuned to detect only reflected radiation of the same frequency, so essentially completely eliminating the likelihood of incorrect triggering of the controller. In this way, the controller will respond only if:
1. The detected reflected detected light is of the same frequency as the source;
2. By arranging the detector in close proximity to the source, the reflected light is returned to the detector and;
3. The transmitted light is polarised in one plane and the reflected light is also polarised but with a plane of polarisation at 90°.

These conditions will be met only with reflection of the transmitted light off a reflector of the kind described above and so the likelihood of a chance encounter with an interference source is extremely unlikely.

Semi-conductor devices are known which are designed both to transmit and to receive visible red light and provide an output dependent on the incident light. If such devices are used with prismatic reflective materials, an output may be expected only if it is the transmitted light which is received back at the device and meeting the conditions specified above.

It is of course necessary for there to be radiation within the area in which detection is to take place else there will be no reflected light for detection. If a narrow beam of radiation is employed, there is a significant chance that the beam will not be incident on the reflective panel and if so, there will be no detection of reflected light. In an attempt to address this problem, the system contemplates the use of a light source which issues a beam of a known polarisation and at a known frequency which light is then reflected from a pair of oscillating mirrors driven at a suitable frequency. The first mirror deflects the beam through the x-axis on to a second mirror which deflects it through the y-axis, so creating patterns known as Lissajous curves within the detection zone. Changing the x and y values will alter the shape boundaries and density of the Lissajous curves. In addition, "hot zones" can be created to suit particular applications. The movement of the mirrors may be driven by the controller, in order to achieve the required shape of the detection zone.

Though in the foregoing reference has been made to the use of twin oscillating mirrors, it will be appreciated that other techniques may be employed such as a combination of fixed and rotating mirror elements, to create a grid pattern. In this way, detection of reflected polarised light of the appropriate frequency, throughout the detection zone is ensured. For example, it may be possible to flood the detection zone with polarised radiation from a single extremely powerful source and then to have multiple detectors arranged around the zone. In addition, rather than employing mechanically-oscillating mirrors, similar effects may be obtained by using mirrors secured to Piezo-electric materials together with suitable driving circuits to cause deflection of the mirrors.

By way of example only, certain specific embodiments of personnel detectors of this invention and also methods of operating the same will now be described in detail, reference being made to the accompanying drawings in which:-
Figure 1 diagrammatically illustrates the operation of a retro-reflective reflector showing that incident light is returned in the opposite direction to that of the incident light but after two reflections;
Figure 2 illustrates a transmitter of vertically polarised radiation which is then incident on the reflector of Figure 1 before being returned to the detector but with horizontal polarisation;
Figure 3 illustrates the use of a prismatic reflector having the retro-reflective properties shown in relation to Figures 1 and 2;
Figure 4 diagrammatically shows one example of a system of this invention using a gate provided with an electrically releasable lock;
Figure 5 diagrammatically shows a second example of a system of this invention and which issues a warning in the event a person attempts to access a protected area when not wearing appropriate safety clothing; and
Figure 6 shows a typical set of Lissajous curves obtained by suitable driving of a pair of mirrors on to which a beam of polarised radiation is directed, in order to swamp a detection zone with radiation.

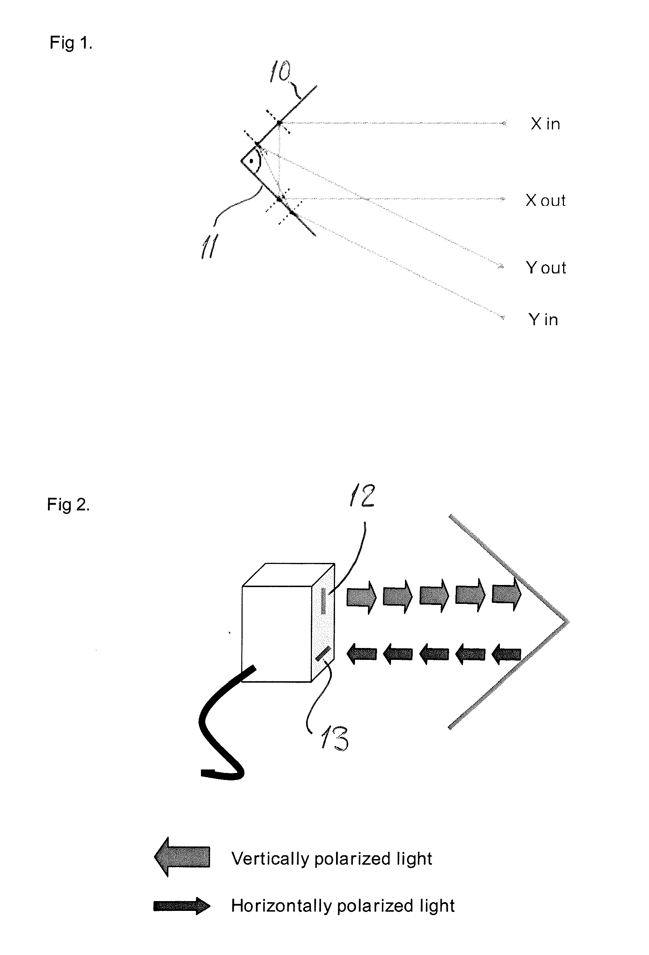

Referring initially to Figure 1, there is shown a retro-reflective mirror arrangement, having two mirrors 10,11 arranged orthogonally and two incident beams X-in and Y-in. Having regard to the arrangement of the mirrors, the reflected beams X-out and Y-out are returned in the same direction as the incident beams. A material having this property is known as a retro-reflective material.

In the event that an incident beam X-in or Y-in is polarised in one particular plane - vertically in the case of Figure 2 - the plane of polarisation is turned through 90° such that the reflected beam X-out or Y-out is horizontally polarised. In the example of Figure 2, the polarised beam is transmitted by a semi-conductor device 12 incorporating a polarising filter (not shown) set with its plane of polarisation vertical. A semi-conductor detecting device 13 incorporates a polarising filter (not shown) set with its plane of polarisation horizontal. As such, detection will take place only if the plane of polarisation of light incident on the detector is horizontal. Further, the device is arranged so that detection will take place only if the light incident upon the detector is of the same narrow frequency band as the transmitted light.

In the case of the arrangement of Figure 2, the transmitted (and so also the received) light is visible red light, advantageously with a wavelength of 625nm. A laser visible light source may conveniently be employed.

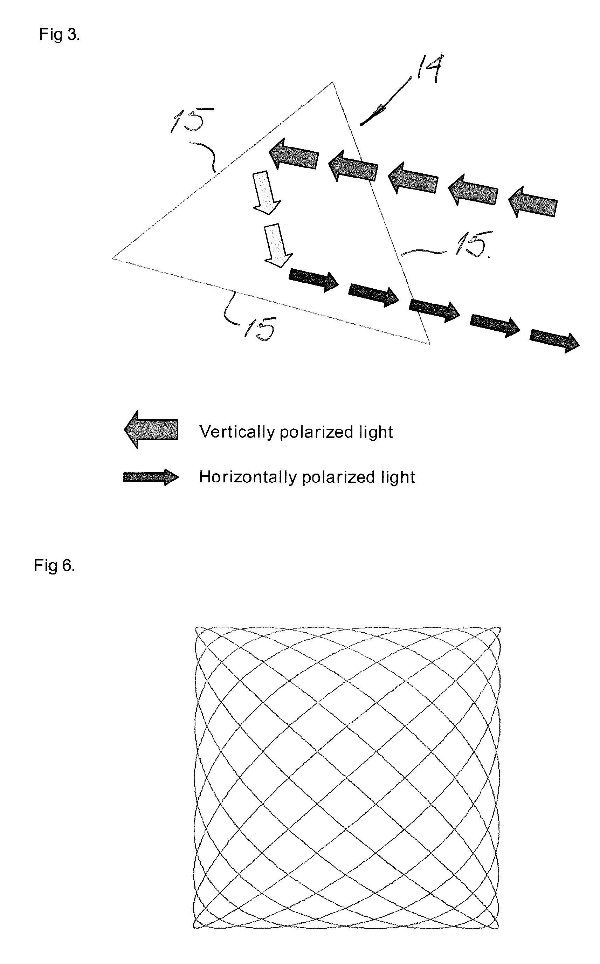

Figure 3 diagrammatically illustrates one of the prisms incorporated within a retro-reflective material having a mass of such prisms carried on a substrate, for sewing to a garment such as a Hi-Vi jacket or tabard. The prism 14 shown in Figure 3 has a base (not shown) by means of which the prism is carried on the substrate (also not shown) and three similar faces 15 each of the same shape and size. The prisms are of a clear plastics material and incident light is subject to total internal reflection at two consecutive faces as shown by the incoming beam X-in, leaving the prism as beam X-out but having had its plane of polarisation turned through 90°.

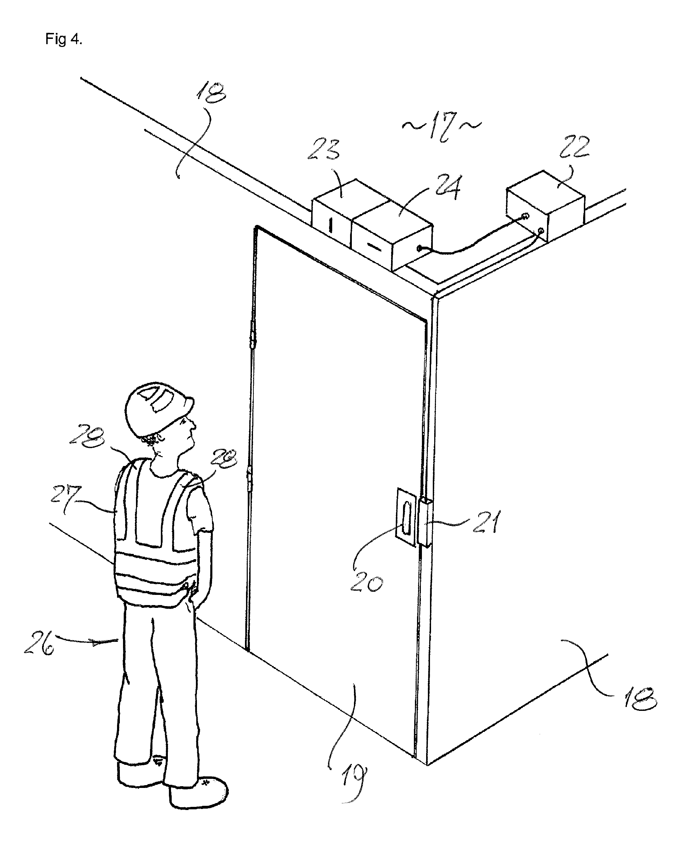

Figure 4 illustrates an area 17 protected by a fence 18 including a hinged gate 19 fitted with a lock mechanism 20. The lock may be released electronically by an actuator 21 supplied with current from a controller 22. Mounted above the gate is a transmitter 23 of vertically polarised visible red light at a defined wavelength (such as 625nm) and immediately adjacent that transmitter is a detector 24 for horizontally polarised light also of the same defined wavelength.

Figure 4 diagrammatically illustrates the presence of a workman 26 wearing a Hi-Vi tabard 27 having retro-reflective strips 28 sewn on to the shoulders thereof. If the workman approaches the gate 19, radiation from the transmitter 23 is reflected by the strips 28 back to the detector 24. That reflective radiation is detected and the controller 22 then operates the lock release actuator 21 to permit the workman access to the area 17, through the gate.

In the event that the workman is not wearing the appropriate high visibility clothing, the radiation from the transmitter 23 will not be reflected back to the detector or if it is, its plane of polarisation will not have been turned through 90°. As such, the controller 22 does not operate the release actuator 21 and so access to the protected area is denied.

As an alternative to, or possibly in addition to, the use of retro-reflective materials on a tabard, a strip of such material may be adhered to the top of a hard-hat worn by the workman. If the requirement is solely for the workman to wear a hard-hat, the transmitter may direct a beam of radiation at a sufficient height (say, above 1700mm) so that even if a tabard with retro-reflective strips is being worn, the release actuator will not be activated unless the workman is wearing a hard-hat.

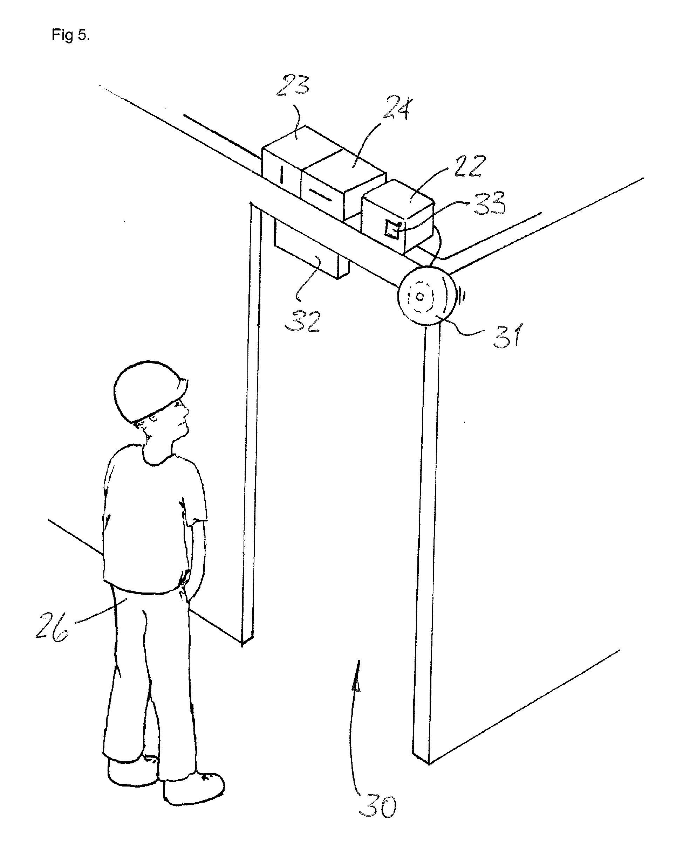

Figure 5 diagrammatically illustrates a similar arrangement but where there is a simple walk-through entrance 30 to the protected area. In Figure 5, like parts with those of Figure 4 are given like reference characters, and will not be described again here. The arrangement of Figure 5 includes a warning alarm bell 31 and a warning light 32 either or both of which may be activated in the event that the system detects a workman is not wearing the appropriate safety clothing.

Should a workman approach the entrance 30 but without wearing a garment with the retro-reflective material, there will be no detection of reflected light having horizontal polarisation and so the workman may walk through the entrance without problems. If however the workman is wearing a suitable garment, the retro-reflective material will direct light back to the detector 24 and so again the workman may walk through the entrance without problems.

In order to ensure a warning is given in the event that a workman is not wearing a suitable garment, the arrangement of Figure 5 additionally includes a PIR or microwave detector 33. This serves to detect the presence of a person in the immediate vicinity of the entrance 30 and so sets the controller 22 into a detection mode, where the alarm 31 and/or light 32 will be activated unless there has been detection of light of the appropriate frequency and polarisation so as to have emanated from the transmitter 23. If the workman is wearing the appropriate garment, the reflected radiation will be detected and so the alarm will not be sounded or illuminated.

In order to allow time for the workman to approach the entrance following the detection of the presence of a person in the vicinity of the entrance, sounding of the alarm or illumination of the warning light may be inhibited for several seconds following an output from the PIR or microwave detector 33.

It will be appreciated that the systems described above may be modified as appropriate to allow their use in circumstances other than protecting a construction site. For example, in the case of a truck having a load area, it would be possible to provide the system in association with the doors giving access to the load area, so as to stop the driver entering the load area unless wearing suitable safety clothing. Further, the system may also be modified to allow a driver of a vehicle to be given a warning in the event he leaves the load area without closing the doors of the load area of the vehicle. The presence of the driver within the load area would inhibit the giving of an alarm, as would the closing of the doors. If then the driver leaves the load area but does not close the doors, an alarm may be given.

In the systems described above, a single beam of vertically polarised visible red radiation is transmitted into a detection zone. In order to obtain better coverage within the zone and also to increase the size of that zone, it is possible to have the beam sweep the zone by reflecting the beam off two mirrors one arranged to oscillate about the x-axis and the other about the y-axis so in effecting generating Lissajous curves. Figure 6 is a typical set of curves obtained in this way. The drive current for the oscillating arrangement may be provided by the controller 22 and may be adjusted in order to vary the area covered by those curves and the density of the beams within those curves.

## Claims

1. A personnel security system including an electronic controller (22) for an associated component (20), a light source (23) driven by the controller for directing polarised light into a detection zone, and a detector (24) for polarised light directed into said zone and reflected with a different plane of polarisation from a reflective panel (28) carried or worn by a person (26) in said zone, the detector (24) being coupled to the controller (22) such that said component (20) is operated when light emanating from the source is detected following reflection of that light by said panel (28) so as to have a different plane of polarisation from that of the light directed into said zone.

2. A system as claimed in claim 1, wherein the planes of polarisation of the light emanating from the light source (23) and the light detected by the detector (24) are substantially orthogonal.

3. A system as claimed in claim 1 or claim 2, wherein said associated component (20) comprises at least one of an electrically-operated lock mechanism for a door, an electrically-operated alarm, an audible sounder, a visible warning light, an electrically-operated switch for an electric power tool, or electrically powered mechanism.

4. A system as claimed in any of the preceding claims, wherein the light emanating from the light source (23) comprises radiation in the visible red wave-band.

5. A system as claimed in any of the preceding claims, wherein the detector (24) is tuned to the frequency of the light source (23) so as to provide a significant output only on the detection of light of the same frequency as but a different plane of polarisation as compared to the light emanating from the light source.

6. A system as claimed in any of the preceding claims, wherein the reflective panel (28) comprises a panel or strip of retro-reflective material.

7. A system as claimed in any of the preceding claims, wherein the panel (28) or strip of retro-reflective material is sewn or bonded to the outside of a garment (27) to be worn in a protected region.

8. A system as claimed in any of the preceding claims, wherein there is additionally provided a personnel-detector (33) to detect the presence of a person in the detection zone and to provide an output to the controller (22) to trigger detection of reflected light emanating from the source.

9. A system as claimed in claim 11, wherein the personnel detector (33) comprises at least one of a motion detector and a heat-sensitive detector, preferably a PIR or microwave detector.

10. A system as claimed in any of the preceding claims, wherein either a single light source is arranged to flood the detection zone with polarised light, or a beam of polarised light from a single source is arranged to be scanned through the detection zone.

11. A system as claimed in claim 10, and wherein there is a beam of polarised light arranged to be scanned through the detection zone, said beam being reflected from a first mirror and then from a second mirror, and the mirrors are arranged to perform oscillations about respective axes disposed at an angle to one another, said mirrors preferably being controlled so that the beam describes a sequence of Lissajous curves.

12. A system as claimed in claim 11, wherein the controller drives either respective Piezo-electric driver elements on which the mirrors are mounted or a combination of fixed and rotating mirror elements, to create a grid pattern of the polarised light within the detection zone.

13. A system as claimed in any of the preceding claims in combination with an article of clothing (27) having a retro-reflective panel secured to the exterior thereof.

14. A method of controlling access to a protected region or restricting unauthorised use of equipment, which method comprises energising a source (23) of polarised light to direct polarised light into a detection zone and monitoring (24) for light emanating from the source and then reflected from a polarising reflecting panel (28) which rotates the plane of polarisation of the incident light from the source, whereby light from the source and reflected from the panel is detected to allow access or use of equipment, as appropriate.

15. A method as claimed in claim 21 and further including the step of detecting the presence (33) of a person in the detection zone, whereafter access or use is permitted only if light emanating from the source is detected following reflection from the reflective panel such that the plane of polarisation of the reflected light is different from the plane of polarisation of the light from the source.
